Europäisches Patentamt

European Patent Office

Office européen des brevets

(11) Publication number: **0 256 110 B1**

# EUROPEAN PATENT SPECIFICATION

(45) Date of publication of patent specification: **15.06.94**

(51) Int. Cl.$^5$: **G11B 5/76**, G11B 5/09, G11B 3/74, G11B 7/00

(21) Application number: **87901782.0**

(22) Date of filing: **16.01.87**

(86) International application number:
**PCT/US87/00126**

(87) International publication number:
**WO 87/04838 (13.08.87 87/18)**

(54) **APPARATUS AND METHOD FOR INCREASING STORAGE CAPACITY OF RECORDING MEDIA.**

(30) Priority: **05.02.86 US 826190**

(43) Date of publication of application:
**24.02.88 Bulletin 88/08**

(45) Publication of the grant of the patent:
**15.06.94 Bulletin 94/24**

(84) Designated Contracting States:
**AT BE CH DE FR GB IT LI LU NL SE**

(56) References cited:
**NL-A- 8 403 950**
**US-A- 4 515 879**

**See also references of WO8704838**

(73) Proprietor: **INFORMATION STORAGE, INC.**
**2768 Janitell Road**
**Colorado Springs, CO 80906(US)**

(72) Inventor: **MOORE, George, Stennis**
**3666 Iguana Drive**
**Colorado Springs, CO 80910(US)**

(74) Representative: **Godsill, John Kenneth et al**
**Haseltine Lake & Co.**
**Hazlitt House**
**28 Southampton Buildings**
**Chancery Lane**
**London WC2A 1AT (GB)**

## Description

This invention relates generally to information storage media and more particularly to a method and apparatus for increasing the information storage capacity of such optical and magnetic media. Cross reference is made to U.S. patent no. 5 812 460 granted 30th April 1991, entitled "Ram Head Positioning and Tracking System".

One optical data recording system stores binary digital information on a storage medium, and reads back such stored information, by scanning a highly focussed laser beam across the medium. A typical recording medium is a disk of glass or moulded plastic having a film layer for recording optical signals received from a laser beam writing head. The disk can be smooth or can contain grooves formed therein (pregrooved disk). Information is typically recorded either in concentric, radially spaced data rings or tracks or in a spiral track formed about the centre of the disk.

While significant efforts have been directed toward developing the physical properties of optical recording disks and toward the optical recording and reading apparatus, little has been done to increase the storage capacity of any particular disk design. Further, design efforts related to optical recording disks have in large measure, to date, used similar formatting and recording techniques to those used in the analogous magnetic recording art, and have not focused on the unique properties peculiar to optical recording.

US-A-4 543 617 discloses a method and an apparatus according to the preambles of accompanying claims 1 and 12. According to this document, pits or dots (markers) of adjacent tracks on a disk recording medium should preferably be arranged on radial lines so as to reduce jitter and crosstalk.

According to a first aspect of the invention, there is provided a method of writing information in a digital recording storage medium having a recording surface area, said medium being suitable for recording discrete markers of information in response to energy bursts from a writing device, said markers having an effective diameter parameter as measured relative to said surface area, said method comprising:-

(a) Forming a first track segment of digital information in said storage medium comprising a plurality of first said markers aligned and spaced along a first track; and

(b) Forming a second track segment of digital information in said storage medium comprising a plurality of second said markers aligned and spaced along a second track, said second track segment being disposed generally parallel to and adjacent said first track segment, said first and second markers being offset from one another such that the second markers face the gaps between the first markers, and vice versa;

characterised in that said first and said second tracks are spaced apart by a distance greater than zero and less than or equal to about twice the largest effective diameter of said markers, thereby enabling the marker packing density on said recording surface to be increased without increasing inter-track interference.

According to a second aspect of the invention, there is provided an information storage apparatus, comprising:-

(a) An information storage medium of a type suitable for selectively accepting digital information in the form of markers;

(b) Means for supporting said information storage medium so as to define a recording surface area of said medium;

(c) Said medium recording surface having a plurality of generally parallel formatted tracks defined thereon, each said track having a plurality of information storage locations aligned and spaced therealong, each such information storage location being suitable for receiving a marker having a width dimension as measured relative to said recording surface area in a direction generally perpendicular to said tracks, wherein information storage locations of adjacent tracks are configured in an interdigitated manner such that markers of adjacent tracks are offset relative to one another;

characterised in that:-

adjacent ones of said tracks are spaced from one another by a distance less than or equal to twice said marker width dimension, thereby enabling the marker packing density of said medium recording surface to be increased without increasing inter-track interference.

The present invention addresses the shortcomings of the prior art by providing simple yet highly effective, reliable and accurate principles for significantly increasing the storage capacity of existing storage media. By applying the principles of this invention, the storage density of existing storage devices can be nearly doubled, without sacrifice in storage accuracy, and generally without requiring any mechanical, optical or medium changes to be made.

The invention is primarily intended for optical recording, although for example it can apply equally well to magnetic recording, through minor modifications to the techniques disclosed herein. Special techniques for recording the markers, as herein defined, as well as techniques to permanently record the tracking bits will be apparent to those skilled in the art. The more circular in shape the marker, the greater the increase in storage capacity that can be achieved. While the benefits of this invention with optical media will be substantially greater than with present day magnetic technology, the latter use should not be overlooked.

The invention incorporates an improved method of configuring digital information on a recording storage medium of the type having a recording surface area so as to significantly increase the amount of information that can be stored on such surface. The invention also embraces media thus configured and reading apparatus therefor. This invention applies to media of varied types (e.g. optical or optomagnetic), suitable for recording discrete markers of information in response to appropriate energy bursts from a writing device, for example a laser pulse, an electromagnetic energy burst, an electron beam, or the like, as appropriate to the medium in use. Alternatively, the information could be replicated onto the recording media as, for example, in an optical read-only-memory (O-ROM) system. Each marker represents and/or contains one or more bits or levels of digital information. Most typically (when binary logic is used), the presence or absence of a marker at a designated marker location will logically signify a binary "1" or "0". However, the invention also applies to digital recording techniques employing "m-ary" logic wherein each marker may represent "m" unique levels of digital information, such as might be the case with an optomagnetic technique wherein the media at a marker location may be polarized to "m" different polarization angles which can be uniquely identifiably detected by the reading head.

The markers may be of varied shapes and configurations, each characterized by an effective domain or diameter parameter as measured relative to the surface area of the recording medium. The invention is most suited to generally circular markers; however, it also applies, but with reduced efficiency, to markers having, for example, an elliptical or other irregular shape. The markers are formed in the storage medium on or along paths followed by a reading head, which are generally referred to as tracks. The particular path followed by a track will depend upon the shape of the medium and properties of the drive apparatus. For example, the recording surface could be generally planar (e.g. a disk or plate), or could be non-planar, as might be the case for a recording storage drum, or even a crystal wherein markers are formed and read by electron beams. For a plate, the tracks would most likely be arranged in rows and/or columns. For a disk, the marker tracks could be configured as concentric rings or a single spiral track. A drum could employ either a single continuous curvilinear track or a plurality of coaxially aligned tracks longitudinally spaced along the recording surface area of the drum. The recording surface itself can be smooth or could be pregrooved or prestamped, wherein the track would typically follow the grooves.

While the invention can be used with media having a conventional track spacing, the offset marker principle of the invention enables the tracks to be placed closer to one another than heretofore possible. Tracks (track segments) can be given a separation of less than or equal to one and one-half times the largest effective diameter of the markers, even when said diameter is about 1.0 $\mu$m or less. The markers of adjacent tracks are offset in a way similar to hexagonal close packing. While it is preferable that the markers from adjacent tracks do not engage or overlap with one another, this may be permissible if the inter-track interference parameters associated therewith enable the reading head to still distinguish between information on adjacent tracks.

This principle can be extended to a plurality of generally parallel tracks each having marker locations respectively offset from those marker locations of the adjacent tracks. This configuration finds particular applicability to disk media with concentric or spiral track(s). Here, the marker packing density on the disk recording surface can be further increased by decreasing the inter-track spacing as a function of radial distance from the centre of the disk. Preferably, the inter-track spacing monotonically decreases with the radial distance. While the radial position of track may be determined by any smoothly varying function, according to one aspect of the invention, a polynomial function and, more preferably, a second order polynomial function, is used. The offset marker principle enables an initial reduction of inter-track spacing, while the above variable track spacing principle enables still further marker packing density at the outer track areas of a disk medium.

Yet additional information storage capacity can be achieved by properly selecting the modulation scheme used in formatting the markers on the recording surface. For example, a preferable modulation scheme wherein each marker position along a track represents a full bit of information is the return-to-zero modulation scheme. As compared to those modulation schemes wherein a full bit of information requires two separate cells or markers, the amount of information recordable on a given track or area of an information recording medium is immediately doubled.

Reference is made, by way of example, to the accompanying drawings, in which:-

Fig. 1 is a diagrammatic plan view of an information storage disk illustrating information storage tracks, sector definitions and the inner and outer storage limits of the disk;

Fig. 2 illustrates a typical format of information recorded within a single sector of a track of the disk in Fig. 1;

Fig. 3 shows data storage positions within the track of Fig. 2, in the prior art;

Fig. 4 shows data storage positions within the track of Fig. 2, according to the offset marker principle of this invention;

Fig. 5 shows the comparative spacing between data storage positions along tracks disposed at various radial distances from the centre of a uniformly rotating disk;

Figs. 6A and 6B are enlarged views of Fig. 5, illustrating data storage positions as they would appear at track locations near and distant from the centre of the disk, respectively, when the offset marker principle of this invention is applied;

Fig. 7 illustrates how the data storage positions of Fig. 6B would appear when the variable track spacing principle of this invention is simultaneously applied with the offset marker principle;

Fig. 8 is a graph of track spacing as a function of radial distance according to an equation derived from the principles of this invention;

Fig. 9 is a chart illustrating the storage capacity increases that can be obtained from a storage disk by practising the principles of this invention; and

Fig. 10 illustrates a pulsed RZ marking scheme for encoding data.

A preferred embodiment of the invention will be described with reference to a non-grooved optical recording disk.

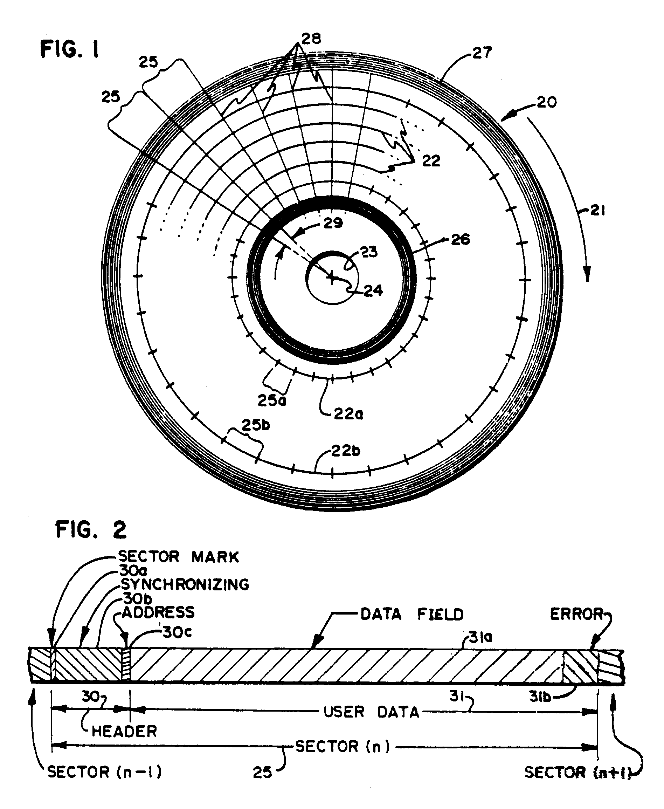

Referring to Fig. 1, such a disk 20 operatively rotates (as shown at 21) about a central axis 24, and preferably has a polycarbonate substrate material with an overlying composite media material approximately 0.1 $\mu$m thick.

The invention applies to all types of optical media such as the ablative type, bubble-forming type, dye polymer phase change type, magneto-optical crystal, and any other type capable of forming a "marker" as defined herein. The disk of the preferred embodiment has a composite thickness of approximately 3.0 mm and a diameter of 130.0 mm. The media material may be physically protected by an overlying protective coating. Information is stored by selectively physically altering the properties of the medium by an appropriate form of energy as mentioned earlier, e.g. by a focussed laser beam, to form "markers". However, this invention also applies where information is first recorded on a master disk and thereafter replicated onto other disks, e.g. by stamping. The markers may, for example, be in the form of deformations (holes, apertures, depressions, pits, protrusions or the like), phase changes, Faraday effects, changes in reflectivity, or any other change that causes information to be recorded in or on the medium and provides a readable signal using digital means. Below, formation of any such alterations to the medium (including replicating and stamping techniques) will be broadly referred to as "writing"; conversely, detection of such alterations will be referred to as "reading".

In the preferred embodiment of the invention, writing of information (markers) on the disk is performed by forming holes in the medium (referred to as "pits") by a laser beam. The physical size, when viewed in top plan of a pit depends upon the characteristics of the laser beam forming the pit, upon the physical characteristics and thickness of the recording media material and upon the rotation speed of the disk 20 during the writing operation. In the preferred embodiment, with a laser having a writing power of 8 milliwatts for a 100 nanosecond duration, the typical half-power diameter of a pit is approximately 1.0 to 1.1 $\mu$m.

In Fig. 1, pits are sequentially formed in the disk along "tracks" 22 around a spindle aperture 23 formed in the centre of the disk.

The information recorded on each track 22 is divided into a plurality of "sectors" 25. In a preferred formatting scheme each track 22 is subdivided into 32 equal sectors each defined by an 11.25° angle (illustrated at 29) projecting from the centre 24 of the disk 20. Each sector contains substantive data written in a unique format as determined by the particular use to which the disk will be put, that can be interpreted by appropriate computer, error detection or synchronisation circuits known in the art. In the preferred embodiment, the disk rotates at a constant speed and is formatted such that the same amount (i.e. "constant angular density") and type of information is stored in each sector 25. Other formatting configurations are possible, for example entire sectors could be formatted so as to contain only synchronisation information while others could contain only data.

The arcuate length of a sector 25a of a track 22a lying closer to the disk centre 24 (Fig. 1) will be significantly shorter than that of a sector 25b of a track 22b further from the disk centre 24. Therefore, information stored in sector 25b will be significantly less crowded than in sector 25a. This property has in the past limited the amount of information that can be stored within a sector. With a spiral track configuration, in order for the same amount of information to be read or written per unit of time (i.e. to have "constant linear density") the disk drive speed must either vary in relation to the position of the read/write head along the disk or, for a fixed speed drive, the data rate must vary so as to produce markers equally spaced along the track.

With concentric recording tracks as illustrated in Fig. 1, data crowding on tracks closer to the centre of the disk defines the operatively useful data storage region of the disk. The disk is typically formatted to include an inner guard band 26 of tracks, which define the minimum radius from the centre 24 of the disk 20 beyond which usable data recording tracks 22 can exist. The disk also has an outer guard band 27 of tracks near its edge defining the outer edge of the usable recording area. The guard bands 26 and 27 each typically comprise 100 to 200 tracks of specific data used by a laser reading head to detect positioning overrun of the head during a coarse positioning/selection mode of operation. In a typical disk there are approximately 14,900 usable data recording tracks 22 located between the inner 26 and outer 27 guard bands with the innermost usable track at a radius of 30.0 mm from the disk centre 24, and the outermost usable track at a radius of 60.0 mm.

A typical format for a single sector "n", as shown in Fig. 2, generally contains a "header" portion 30 with system control information, and a "data" portion 31 which contains the substantive data to be written in the sector. The header 30 portion can include such control information as a "sector mark" 30a, "synchronising" information 30b, "address" information 30c and servo tracking information (not illustrated). The data stored in the header 30 portion is typically written on either "side" of the centre line of a track 22, with each data bit actually comprising a pair of such bits which straddle the track centre line so as to provide continuous information to an optical reading head during track crossings, for maintaining the sector data bit count and synchronisation function. The user data 31 portion of the sector 25 includes a "data field" 31a, "error" information 31b and servo tracking information (not illustrated). The information in the data field 31a portion is typically written along the centre line of the track 22. Servo tracking information is uniformly distributed throughout each sector at 4-byte intervals. Each four bytes of recorded information is followed by one half-byte (i.e. a "nibble") of servo information which provides precise head-track alignment throughout each revolution of the disk 20. Using the above-described format, each track sector 25 has a 360 byte capacity. The header portion 30 contains 40 bytes, and the user data portion 31 contains 320 bytes. The presence of the servo nibbles and error control information 31b in the user data portion 31 of the sector, reduces the actual number of user-available data bytes per sector to 256. However, the total user-available data storage capacity of the entire disk, without the inclusion of the principles of this invention, is typically around 120 million bytes. In the format of Fig. 2, the header 30 information always occurs at the beginning of a sector. As the synchronising 30b and servo tracking 30c information recorded in the header portion 30 is very "regular" in appearance, it is visible on the disk as radial lines of discoloration in the otherwise uniform surface, shown by 28 in Fig. 1.

The spacing between adjacent tracks 22 is determined in part by the diameter of the markers and by the inter-track interference seen by the laser read head apparatus. A track spacing of about 1.8 $\mu$m for a marker diameter of 1.1 $\mu$m is typical.

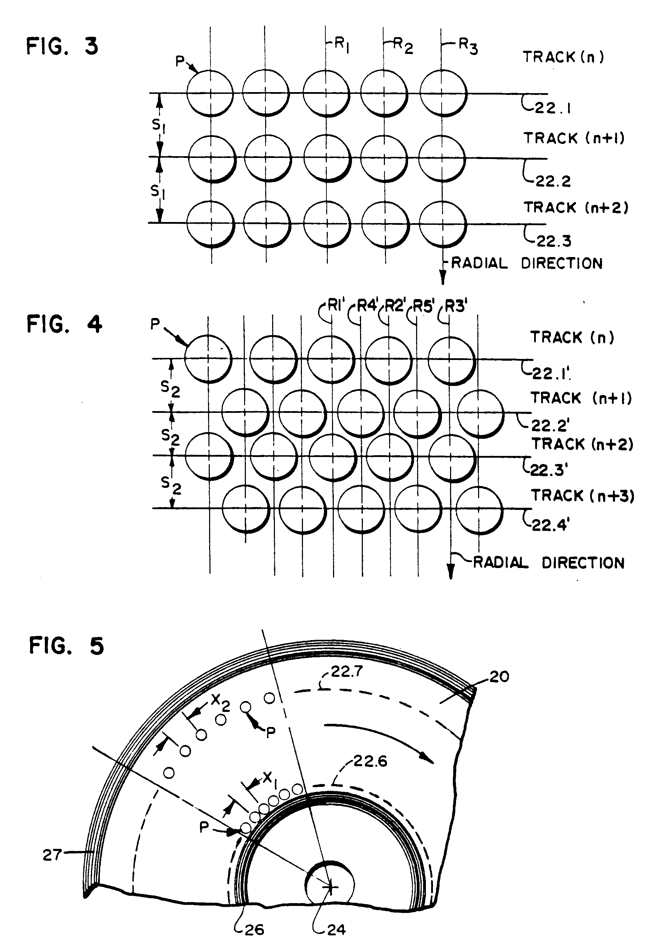

Data storage positions in the user data portion 31 of a sector of a track 22, as typically configured in the prior art, are illustrated in Fig. 3. The marker locations possible for data recording are generally illustrated by the "open circle" locations designated at "P", and information is read by detecting the presence or absence of a marker at such locations depending upon the type of recording modulation used. A logical "one", for example, may be denoted by the presence of a marker at a pit location "P", while a "zero" is indicated by the absence of a marker at a pit location "P". The inter-track spacing $S_1$ of adjacent tracks is constant across the entire usable information recording portion of the disk. Referring to Fig. 3, "track n" is generally designated at 22.1, "track n + 1" is designated at 22.2, and "track n + 2" is designated at 22.3. The positions "P" need not necessarily contain a recorded marker, but are merely "available" for recording data. The marker positions (P) in Fig. 3 are illustrated as they would typically appear in the in-line geometry configuration of prior art optical disks, with a typical spaced relationship giving an acceptable level of inter-track interference. Adjacent markers of, for example, track n identically radially align with corresponding adjacent markers of track n + 1, as illustrated by the radial line positions R1, R2, and R3 in Fig. 3. This radial in-line geometry of markers along the recording tracks in Fig. 3 has significantly limited the storage density.

A first technique for increasing the storage density, the "offset marker principle" of the invention, is illustrated in Fig. 4. As shown, the available marker positions of adjacent tracks are angularly offset from one another by one-half of the angle between adjacent marker positions, such that they do not radially align with each other. This feature allows adjacent tracks to be more closely spaced for a given level of inter-track interference, thereby increasing the "packing density" of the marker positions on the recording media surface. The Fig. 4 arrangement provides the same inter-track interference characteristics as does the Fig. 3 arrangement; however, the spacing ($S_2$) between adjacent

tracks in Fig. 4 is significantly less than the spacing ($S_1$) in Fig. 3. With a marker diameter of approximately 1.1 $\mu$m, solely by the use of the offset marker principle, the worst case adjacent track spacing can be reduced from a prior art minimum of 1.5 $\mu$m to approximately 1.3 $\mu$m (the worst case occurs at track locations adjacent the inner guard band 26). When the marker positions of adjacent tracks (such as 22.1' and 22.2') in Fig. 4 are angularly offset as defined above, the marker positions of every second track (i.e. 22.1' and 22.3') radially align with one another. For example, the marker positions for tracks 22.1' and 22.3' radially align along the radial lines designated at R1', R2' and R3'; whereas those for tracks 22.2' and 22.4' radially align along $R_4$' and $R_5$'. This principle of aligning markers according to an offset geometry generally follows the hexagonal close-packing theorem, but wherein markers are sufficiently spaced to satisfy system inter-track interference specifications.

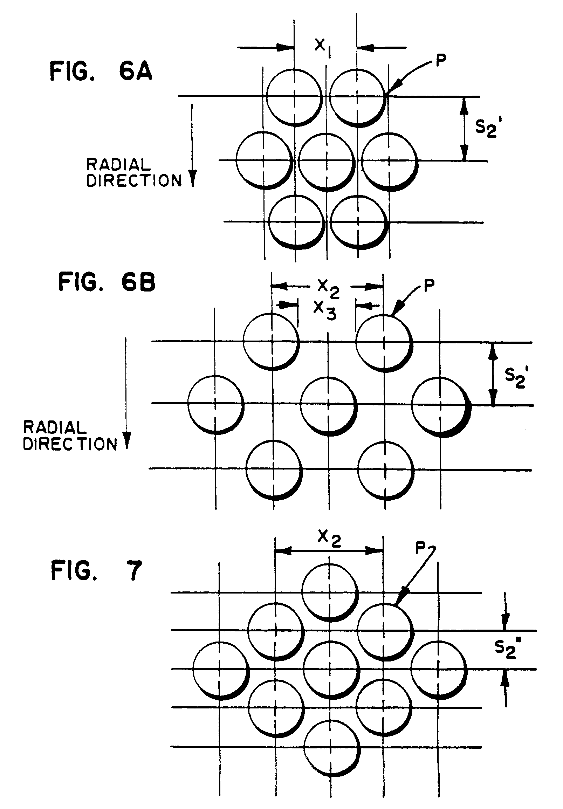

While providing a first order of increased marker packing density by itself, the offset marker principle when applied to information storage disks, allows one to even further increase marker packing density by decreasing the spacing between adjacent tracks as a function of the track radial distance from the centre of the disk 20. This is possible because there is more space for data recording within sectors of tracks far from the centre 24 of the disk 20, than in sectors of tracks closer to the inner guard band 26. Referring to Fig. 5, a sector of a track 22.6 close to the inner guard band 26 has its marker positions "P" located fairly close to one another, i.e. with relatively small spacing between them, as illustrated at "x1" in Fig. 5. In contrast, a sector of a track 22.7 further from the centre 24 has significantly more space for recording the same amount of data, and has a significantly larger spacing distance "x2" between adjacent marker positions. The additional space (x2-x1) allows the inter-track spacing to be progressively reduced as one moves radially outward from the centre of the disk 20, since there is more room between adjacent marker positions on such tracks to accommodate (by use of the offset marker principle) marker positions from adjacent tracks. This situation is better exemplified with reference to Figs. 6 and 7.

Fig. 6 is a somewhat scaled illustration of marker positions for a disk 20 configured according to the offset marker principle for two situations: Fig. 6A, for "inner" tracks located relatively close to the inner guard band 26; and Fig. 6B for "outer" tracks closer to the outer guard band 27. With an optical disk 20 having the parameters described above, the "x1" spacing for the "inner" tracks (Fig. 6A) is approximately only one-half of the "x2" spacing for the "outer" tracks (Fig. 6B). In Fig. 6A, typically "x1" is approximately 1.1 $\mu$m and the adjacent track spacing $S_2$' is approximately 1.3 $\mu$m. In Fig. 6B the adjacent track spacing $S_2$' remains at 1.3 $\mu$m, but the "x2" dimension has increased to 2.2 $\mu$m, leaving a gap "x3" between adjacent positions of approximately 1.1 $\mu$m, which can almost entirely accommodate another marker position.

As explained later, a pulsed type of marking scheme such as that referred to as a "return to zero" (RZ) marking scheme is preferred for forming markers since the markers are generally circular. Other marking schemes (such as typically used in the magnetic recording), which use modulation techniques that form markers having elongated or elliptical domains, can also be used.

The comparative diagrams of Figs. 6A and 6B suggest that the inter-track spacing ($S_2$') can be reduced as some function of the radial distance of the track from the centre of the disk. By way of example, if the original inter-track spacing $S_2$' of Fig. 6 was 1.3 $\mu$m, for a marker "P" diameter of approximately 1.0 $\mu$m, Fig. 7 illustrates how the marker positions of Fig. 6B would appear with a reduced inter-track spacing $S_2$' of 0.75 $\mu$m, with all other parameters remaining the same. Fig. 7 readily illustrates that reduction of the inter-track spacing near the "outer" guard band 27 can provide nearly a two-to-one local increase in marker packing density as compared to a track positioned near the "inner" guard band 26. Research data has indicated that the Fig. 7 arrangement provides more interference from the markers located two tracks removed (i.e. above and below) from the track of interest, than from the adjacent markers on the same track. However, the interference margins for this situation are still better than for the configuration of Fig. 6A, for tracks located near the inner guard band 26.

For a prior art disk with uniform inter-track spacing across the disk surface, the radial position of the disk drive read/write laser head on the disk surface is given by:-

$$P = bN$$

wherein "N" is the track number, "b" is the inter-track spacing, and "P" is the distance from the radially outermost usable track (i.e. track "0" is the first usable track adjacent to the outer guard band 27).

To implement the variable track spacing principle illustrated in Fig. 7, the above equation must be modified to allow location of the disk drive read/write head at any desired track. In the preferred embodiment, a simple polynomial equation in the following form can be used:-

$$P = bN + aN^2$$

where "P" is the radial distance from the outermost usable track, "N" is the track number beginning with "zero" at the outermost usable tracks between track "0" and track "1", "b" is the track spacing at the outer radius, and "a" is given by the following equation:-

$$a = (TS_i^2 - TS_o^2)/(4P_i)$$

where "$TS_o$" is the track spacing at the outermost radius near the outer guard band 27, "$TS_i$" is the track spacing at the innermost radius near the inner guard band 26, and "$P_i$" is the innermost track radius.

The track number as a function of "P" is found to be:-

$$N = (-b + \sqrt{b^2 + 4aP})/(2a),$$

and the track spacing as a function of "P" is given by:-

$$TS(P) = \sqrt{b^2 + 4aP}.$$

The above example uses a second order polynomial equation for determining the track location and inter-track spacing, as an example; however, higher order polynomial equations could readily be used. Indeed, any equation (non-polynomial, logarithmic, etc.) that smoothly varies the inter-track spacing as a function of radial distance across the disk (i.e. which monotonically decreases the inter-track spacing from the innermost to the outermost usable track locations) can be used. Such equations, however, should be distinguished from the concept of "banding" (i.e. wherein inter-track spacing varies with radial distance in discrete steps or bands). Once the equation for determining the track location is defined, those skilled in the art can readily design disk drive apparatus responsive to such equation for properly positioning the read/write head at the desired track.

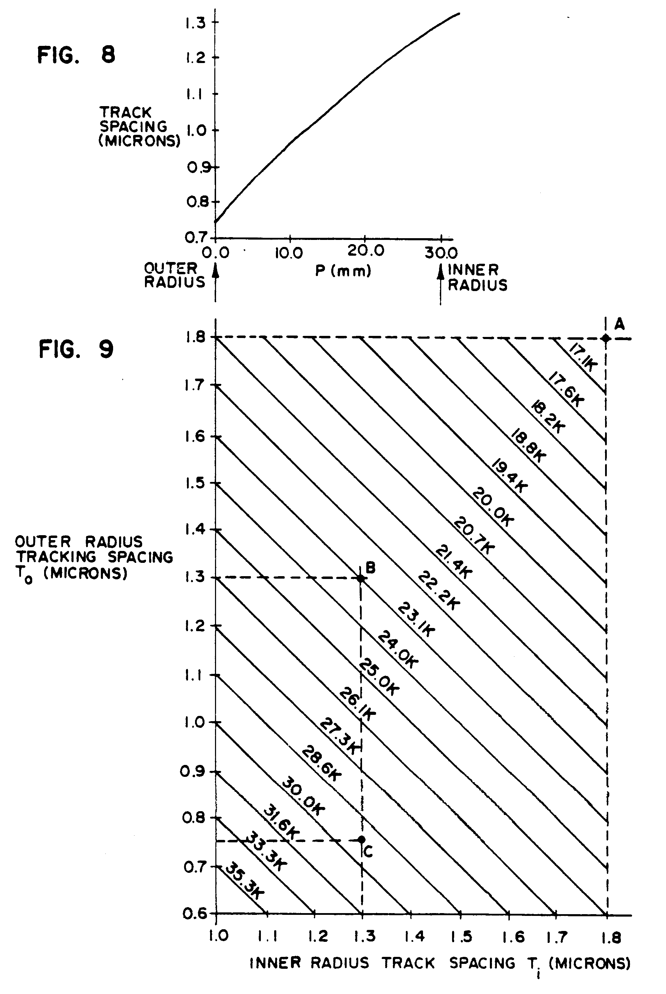

The inter-track spacing chart of Fig. 8 was derived by use of the above-described equations for a typical prior art disk of diameter 130 mm and usable track radius 30 mm between the inner and outer guard bands, and illustrates the marker position packing density achievable by the invention. In this example, the track spacing at the outermost radius (i.e. between track "0" and track "1") was 0.75 $\mu$m; the track spacing at the innermost radius (i.e. closest to the inner guard band 26) was 1.3 $\mu$m; the innermost radius was 30 mm; and the outermost radius (i.e. that of track "0") was 60 mm. As shown, the inter-track spacing smoothly varies from 1.3 $\mu$m to 0.75 $\mu$m when proceeding from the inner to the outer radius.

Thus, a significant increase in available marker position density, and therefore information storage capacity, of a disk can be achieved by the principles of this invention. As an example, the 130 mm disk previously described, with a usable track area extending between 30 mm and 60 mm from the disk centre and a 1.8 $\mu$m inter-track spacing, has around 17,000 available user tracks. Using the above format wherein each track sector has 256 available user bytes gives a capacity of approximately 140 megabytes available for user information storage. However, using only the offset marker principle (Figs. 3 and 4), with a reduced inter-track spacing of 1.3 $\mu$m, the number of user tracks and information storage capability of the same disk can be increased to 23,000 and approximately 190 megabytes respectively, nearly a 35% increase in capacity. By further incorporating the variable track spacing principle, as described above for an inner radius track spacing of 0.75 $\mu$m and an outer radius track spacing of 1.3 $\mu$m, these figures can be further increased to approximately 29,000 and 237 megabytes respectively, approximately another 25% increase.

This is graphically illustrated in Fig. 9, developed using the variable track spacing formula developed above, wherein the number of tracks equals:-

$$N_T = (2P)/(Ti + To)$$

where "P" is the working track radius available between the inner and outer guard bands, "Ti" is the inter-track spacing at the inner guard band and "To" is the inter-track spacing at the outer guard band. In Fig. 9, "A" depicts the number of tracks available with prior art disk configurations as above described; "B" designates the number of tracks available by the use of the offset marker principle; and "C" designates the number of tracks made available by using both the offset marker and the variable track spacing principles. Other parameter combinations using different inner and outer track spacing parameters (Ti and To respectively) can be readily derived from Fig. 9.

The magnetic recording art often uses a modified frequency modulation (MFM) scheme, which can be used but is not required in optical recording.

To write a logical "1" using the MFM modulation scheme, one cannot simply use a single data recording "cell" for entering a positive (or alternatively negative) pulse, but must use two "cells". The actual recording format for the logical "1" depends upon whether it is preceded in its data stream by another logical "1" or by a logical "0". In the former case, the actual entry into the two cells will be (1,0). For the latter case, the logical "1" entry will be (0,0). Recorded signals using MFM modulation contain little DC content, for compatibility with non-DC competent magnetic sensing heads (typically transformer type sensors).

However, optical recording is "DC competent", allowing the use of modulation schemes other than MFM and other related modulation schemes. By its very nature, the optical recording scheme is sensitive to all particular data patterns such as all "zeros" or all "ones", when serially recorded next to each other. A single cell position can be used for a single logical entry (such as a logical "1"), unlike MFM modulation. In addition, with optical recording techniques clocking information can be directly derived from the servo nibbles, removing the necessity for using self-clocking modulation schemes, such as MFM or 2-out-of-7 commonly used in magnetic recording.

These features of optical recording allow one to consider modulation formats that are not self-clocking and which require DC competence, but which allow significantly higher data storage densities on a given optical recording medium. Two such modulation schemes are the NRZ (non-return to zero) code and the RZ (return to zero, or pulsed NRZ) code. The RZ modulation scheme is presently favoured since it is compatible with writing methods resulting in essentially circular markers, and provides the benefit that information written by the RZ format is logically ORed on the medium. This allows some fields (such as flags and pointers) to be written after the initial data recording, enabling flagging of sectors that fail after disk certification, and minor updates of files without rewriting the entire file. These features are in direct contrast with the "write-once" nature of the MFM code.

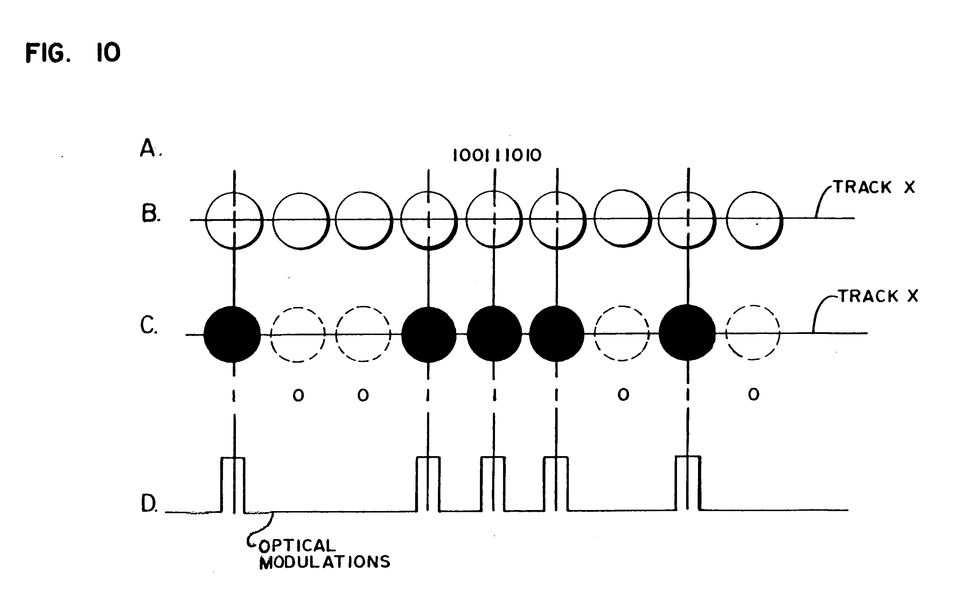

The RZ modulation scheme basically provides for writing a logical "one" in a single cell position by, for example, burning a pit or marker in a designated marker position, and for recording a logical "0" by simply leaving a designated marker position unaltered. Fig. 10 illustrates the use of pulsed RZ marking for encoding data into storage positions of an optical recording track. Fig. 10A depicts the logical (i.e. binary) number to be recorded as 100111010. Fig. 10B illustrates the data recording (marker) positions along track "X" that are available for recording. Fig. 10C illustrates track "X" as it would appear after recording of the "100111010" logical information into the available data recording track positions (recording of data proceeds from "left to right" in the Figure, and "empty" data positions into which a pit was not burned are shown by dashed lines). Fig. 10D illustrates the intensity of the modulated laser beam required to write the pattern of Fig. 10C and illustrates the "return to zero" nature of the modulation.

By applying RZ modulation to optical data storage, the data storage density can be immediately doubled over that possible by MFM modulation using orthogonal cells. This results directly from the fact that with RZ modulation only a single cell is needed to record a logical "bit" of information. This feature, coupled with the above offset marker and variable track spacing principles, enables significantly increased packing density of recorded information on a given optical storage medium. M-ary modulation schemes offer yet further increases in information storage capabilities, but are, as previously described, most applicable when the markers are generally circular.

## Claims

1.  A method of writing information in a digital recording storage medium having a recording surface area, said medium being suitable for recording discrete markers of information in response to energy bursts from a writing device, said markers having an effective diameter parameter as measured relative to said surface area, said method comprising:-

    (a) Forming a first track segment of digital information in said storage medium comprising a plurality of first said markers aligned and spaced along a first track; and

    (b) Forming a second track segment of digital information in said storage medium comprising a plurality of second said markers aligned and spaced along a second track, said second track segment being disposed generally parallel to and adjacent said first track segment, said first and second markers being offset from one another such that the second markers face the gaps between the first markers, and vice versa;

    characterized in that:-

    said first and said second tracks are spaced apart by a distance greater than zero and less than or equal to about twice the largest effective diameter of said markers, thereby enabling the marker packing density on said recording surface to be increased without increasing inter-track interference.

2.  The method as claimed in claim 1, wherein said first and second tracks are spaced by a distance of less than or equal to about one and one-half times the largest effective diameter of said markers.

3.  The method as claimed in claim 1 or 2, wherein said largest effective diameter parameter of said markers is less than or equal to about 1.5 $\mu$m.

**4.** The method as claimed in claim 1, 2 or 3, wherein said storage medium is of a type suitable for recording m different states of digital information within a marker such that each marker is capable of containing m levels of digital information.

**5.** The method as claimed in any of claims 1 to 4, wherein the second markers are offset with respect to the first markers by a distance as measured along said second track segment of approximately 50% of the separation distance between centres of adjacent first markers.

**6.** The method as claimed in any preceding claim, wherein said digital recording storage medium comprises a recording surface area of a recording disk apparatus; wherein said first and said second track segments respectively comprise segments of distinct first and second tracks along which said digital information is recorded in said medium, said first and said second tracks being concentrically aligned on said surface about a central axis of said disk.

**7.** The method as claimed in claim 6, further comprising the step of forming a third track segment of digital information in said storage medium comprising a plurality of third said markers aligned and spaced along a third track, said third track being concentrically aligned about said axis with said first and said second tracks and radially spaced from said second track by a distance less than or equal to about twice the largest effective diameter of said markers, wherein said second track lies between said first and said third tracks, and wherein said first and third markers respectively radially align with one another about said disk axis and are angularly offset from the second markers.

**8.** The method as claimed in claim 6, further including the step of forming in the radial direction of said disk a plurality of successively alternating said first and said second track segments on said recording surface, each said track segment being respectively radially spaced from the adjacent said track segment by a distance less than or equal to about twice the largest effective marker diameter, wherein said plurality of track segments respectively form parts of unique concentric tracks respectively radially spaced from one another about said central disk axis.

**9.** The method as claimed in claim 8, wherein the radial spacing between adjacent tracks is non-uniform across said disk, such that tracks towards the edge of the disk are spaced closer than tracks towards the centre of the disk.

**10.** The method as claimed in claim 9, wherein the radial positions of said tracks from the central axis of said disk are located according to a polynomial function.

**11.** The method as claimed in any preceding claim, wherein said digital recording storage medium is an optical storage medium, and wherein said markers formed on said first and said second track segments are optically readable.

**12.** An information storage apparatus, comprising:-
(a) An information storage medium of a type suitable for selectively accepting digital information in the form of markers;
(b) Means for supporting said information storage medium so as to define a recording surface area of said medium;
(c) Said medium recording surface having a plurality of generally parallel formatted tracks defined thereon, each said track having a plurality of information storage locations aligned and spaced therealong, each such information storage location being suitable for receiving a marker having a width dimension as measured relative to said recording surface area in a direction generally perpendicular to said tracks, wherein information storage locations of adjacent tracks are configured in an interdigitated manner such that markers of adjacent tracks are offset relative to one another;
characterised in that:-
adjacent ones of said tracks are spaced from one another by a distance less than or equal to twice said marker width dimension, thereby enabling the marker packing density of said medium recording surface to be increased without increasing inter-track interference.

**13.** An information storage apparatus as claimed in claim 12, wherein said information storage medium is a magnetically writable storage medium in which said markers are formed in response to electromagnetic energy signals.

**14.** An information storage apparatus as claimed in claim 12 or 13, wherein said support means comprises a disk and wherein said recording surface represents a generally planar surface of said disk.

**15.** An information storage apparatus as claimed in claim 12, 13 or 14, wherein said information storage medium is of a type suitable for recording said markers having optically readable properties.

**16.** An information storage apparatus as claimed in any of claims 12 to 15, wherein the radial spacing between adjacent tracks is non-uniform across the recording surface area.

**17.** An information storage apparatus as claimed in claim 16, wherein the inter-track spacing between adjacent tracks smoothly decreases monotonically as a function of the increase in radial distance of said tracks from the disk central axis.

**Patentansprüche**

**1.** Verfahren zum Speichern von Information in einem Speichermedium für Digitalaufzeichnungen mit einer Aufzeichnungsfläche, wobei das Medium zur Aufzeichnung diskreter Informationsmarkierungen mit einem effektiven, relativ zur Aufzeichnungsfläche gemessenen Durchmesserparameter als Reaktion auf Energieimpulse einer Schreibvorrichtung geeignet und wobei das Verfahren umfaßt:

(a) Das Ausbilden eines ersten Spursegments digitaler Information mit einer Mehrzahl erster Markierungen, die in Abständen entlang einer ersten Spur ausgerichtet in dem Speichermedium; und

(b) das Ausbilden eines zweiten Spursegments digitaler Information mit einer Mehrzahl zweiter Markierungen, die in Abständen entlang einer zweiten Spur ausgerichtet sind, in dem Speichermedium, wobei das zweite Spursegment im allgemeinen parallel und benachbart dem ersten Spursegment angeordnet ist und die ersten und zweiten Markierungen so gegeneinander versetzt sind, daß die zweiten Markierungen gegenüber den Lücken zwischen den ersten Markierungen liegen und umgekehrt;

**dadurch gekennzeichnet**,

daß die ersten und zweiten Spuren voneinander einen Abstand haben, der größer als null und kleiner oder gleich etwa dem doppelten größten effektiven Markierungsdurchmesser ist, wodurch sich die Packungsdichte der Markierungen auf der Aufzeichnungsfläche ohne Erhöhung der Interferenz zwischen den Spuren erhöhen läßt.

**2.** Verfahren nach Anspruch 1, wobei der Abstand zwischen den ersten und zweiten Spuren kleiner oder gleich etwa dem eineinhalbfachen größten effektiven Markierungsdurchmesser ist.

**3.** Verfahren nach Anspruch 1 oder 2, wobei der größte effektive Durchmesserparameter der Markierungen kleiner oder gleich etwa 1,5 $\mu$m ist.

**4.** Verfahren nach Anspruch 1, 2 oder 3, wobei das Speichermedium nach seiner Art zur Aufzeichnung $m$ unterschiedlicher Zustände digitaler Information in einer Markierung geeignet ist, so daß jede Markierung $m$ Werte digitaler Information annehmen kann.

**5.** Verfahren nach einem der Ansprüche 1 bis 4, wobei die zweiten Markierungen bezüglich der ersten Markierungen um einen entlang des zweiten Spursegments gemessenen Abstand von etwa 50% des Abstands zwischen Mittelpunkten benachbarter erster Markierungen versetzt sind.

**6.** Verfahren nach einem der vorhergehenden Ansprüche, wobei das Speichermedium für Digitalaufzeichnungen eine zu einer Plattenaufzeichnungsvorrichtung gehörende Aufzeichnungsfläche umfaßt, und wobei die ersten und zweiten Spursegmente jeweils Segmente getrennter, auf der Fläche konzentrisch um eine Mittelachse der Platte ausgerichteter erster bzw. zweiter Spuren umfassen, entlang denen die digitale Information in dem Speichermedium aufgezeichnet ist.

**7.** Verfahren nach Anspruch 6, wobei in dem Speichermedium in einem weiteren Schritt ein drittes Spursegment digitaler Information mit einer Mehrzahl dritter Markierungen ausgebildet wird, die in Abständen entlang einer dritten Spur ausgerichtet sind, die wiederum mit der ersten und zweiten Spur konzentrisch um die Achse ausgerichtet ist und deren radialer Abstand von der zweiten Spur kleiner oder gleich etwa dem doppelten größten effektiven Markierungsdurchmesser ist, wobei weiter die zweite Spur zwischen der ersten und dritten Spur liegt und wobei die ersten und dritten Markierungen bezüglich der Plattenachse jeweils radial aufeinander ausgerichtet, gegenüber den zweiten Markierungen jedoch im Winkel versetzt sind.

**8.** Verfahren nach Anspruch 6, wobei auf der Aufzeichnungsfläche in einem weiteren Schritt in radialer Plattenrichtung eine Mehrzahl von Spursegmenten, und zwar nacheinander abwechselnd je ein erstes und ein zweites Spursegment, ausgebildet wird, wobei weiter der radiale Abstand zwischen jedem Spursegment und dem jeweiligen Nachbar-Spursegment kleiner oder gleich etwa dem doppelten größten effektiven Markierungsdurchmesser ist, und wobei die Mehrzahl von Spursegmenten jeweils Bestandteil einzelner konzentrischer Spuren um die Mittelachse der Platte ist, die voneinander den entsprechenden radialen Abstand haben.

9. Verfahren nach Anspruch 8, wobei der radiale Abstand zwischen benachbarten Spuren über die Platte hinweg nicht gleichbleibt, so daß Spuren zum Rand der Platte hin näher beieinander liegen als zur Mitte der Platte hin.

10. Verfahren nach Anspruch 9, wobei die radialen Abstände der Spuren von der Mittelachse der Platte einer Polynomfunktion entsprechen.

11. Verfahren nach einem der vorhergehenden Ansprüche, wobei das Speichermedium für Digitalaufzeichnungen ein optisches Speichermedium ist, und wobei die auf den ersten und zweiten Spursegmenten ausgebildeten Markierungen optisch auslesbar sind.

12. Informationsspeichervorrichtung,
    (a) mit einem Informationsspeichermedium, das nach seiner Art zur selektiven Übernahme digitaler Information in Form von Markierungen geeignet ist;
    (b) mit einer Einrichtung zum Tragen des Informationsspeichermediums, so daß eine Aufzeichnungsfläche bei dem Medium definiert ist;
    (c) wobei auf der Aufzeichnungsfläche des Mediums eine Mehrzahl im allgemeinen paralleler, formatierter Spuren definiert ist, entlang denen jeweils in Abständen eine Mehrzahl von Informationsspeicherstellen ausgerichtet deren jede zur Aufnahme einer Markierung mit einer relativ zur Aufzeichnungsfläche und im allgemeinen senkrecht zur Spurrichtung gemessenen Breiten-Dimension geeignet wobei die Informationsspeicherstellen benachbarter Spuren ineinandergreifend angeordnet sind, so daß die Markierungen benachbarter Spuren gegeneinander versetzt sind;
**dadurch gekennzeichnet**,
daß der Abstand zwischen benachbarten Spuren kleiner oder gleich der doppelten Markierungsbreitendimension ist, wodurch sich die Packungsdichte der Markierungen auf der Aufzeichnungsfläche ohne Erhöhung der Interferenz zwischen den Spuren erhöhen läßt.

13. Informationsspeichervorrichtung nach Anspruch 12, wobei das Informationsspeichermedium ein magnetisch beschreibbares Speichermedium ist, in dem die Markierungen als Reaktion auf elektromagnetische Signale ausgebildet werden.

14. Informationsspeichervorrichtung nach Anspruch 12 oder 13, wobei die Trägereinrichtung eine Platte umfaßt, und wobei eine im allgemeinen ebene Oberfläche dieser Platte die Aufzeichnungsfläche darstellt.

15. Informationsspeichervorrichtung nach Anspruch 12, 13 oder 14, wobei das Informationsspeichermedium nach seiner Art zum Aufzeichnen von Markierungen mit optisch auslesbaren Eigenschaften geeignet ist.

16. Informationsspeichervorrichtung nach irgendeinem der Ansprüche 12 bis 15, wobei der radiale Abstand zwischen benachbarten Spuren über die Aufzeichnungsfläche hinweg nicht gleichbleibt.

17. Informationsspeichervorrichtung nach Anspruch 16, wobei der Spurabstand zwischen benachbarten Spuren als Funktion des wachsenden radialen Abstands der Spuren von der Mittelachse der Platte gleichmäßig monoton abnimmt.

**Revendications**

1. Procédé d'écriture d'information dans un support de stockage d'enregistrement numérique comportant une zone de surface d'enregistrement, ledit support convenant pour enregistrer des repères discrets d'information en réponse à des salves d'énergie en provenance d'un dispositif d'écriture, lesdits repères comportant un paramètre de diamètre efficace tel que mesuré par rapport à ladite zone de surface, ledit procédé comprenant :
    (a) la formation d'un premier segment de piste d'information numérique dans ledit support de stockage, comprenant une pluralité de premiers desdits repères alignés et espacés le long d'une première piste ; et
    (b) la formation d'un second segment de piste d'information numérique dans ledit support de stockage, comprenant une pluralité de seconds desdits repères alignés et espacés le long d'une seconde piste, ledit second segment de piste étant disposé de manière à être de façon générale parallèle et adjacent audit premier segment de piste, lesdits premiers et seconds repères étant décalés les uns des autres de telle sorte que les seconds repères fassent face aux espaces séparant les premiers repères et vice-versa,

caractérisé en ce que :

lesdites première et seconde pistes sont espacées d'une distance supérieure à zéro et inférieure ou égale à environ deux fois le diamètre efficace le plus grand desdits repères, ce qui permet d'augmenter la densité de stockage des repères sur ladite surface d'enregistrement sans augmenter une interférence interpistes.

2. Procédé selon la revendication 1, dans lequel lesdites première et seconde pistes sont espacées d'une distance inférieure ou égale à environ une fois et demie le diamètre efficace le plus grand desdits repères.

3. Procédé selon la revendication 1 ou 2, dans lequel ledit paramètre de diamètre efficace le plus grand desdits repères est inférieur ou égal à environ 1,5 $\mu$m.

4. Procédé selon la revendication 1, 2 ou 3, dans lequel ledit support de stockage est d'un type qui convient pour enregistrer m états différents d'information numérique dans un repère de telle sorte que chaque repère puisse contenir m niveaux d'information numérique.

5. Procédé selon l'une quelconque des revendications 1 à 4, dans lequel les seconds repères sont décalés par rapport aux premiers repères d'une distance, telle que mesurée le long dudit second segment de piste, d'approximativement 50% de la distance de séparation entre des centres de premiers repères adjacents.

6. Procédé selon l'une quelconque des revendications précédentes, dans lequel ledit support de stockage d'enregistrement numérique comprend une zone de surface d'enregistrement d'un appareil à disque d'enregistrement ; dans lequel lesdits premier et second segments de piste comprennent respectivement des segments de première et seconde pistes distinctes le long desquelles ladite information numérique est enregistrée dans ledit support, lesdites première et seconde pistes étant alignées concentriquement sur ladite surface autour d'un axe central dudit disque.

7. Procédé selon la revendication 6, comprenant en outre l'étape de formation d'un troisième segment de piste d'information numérique dans ledit support de stockage, comprenant une pluralité de troisièmes dits repères alignés et espacés le long d'une troisième piste, ladite troisième piste étant alignée concentriquement autour dudit axe avec lesdites première et seconde pistes et étant espacée radialement de ladite seconde piste d'une distance inférieure ou égale à deux fois le diamètre efficace le plus grand desdits repères, dans lequel ladite seconde piste est située entre lesdites première et troisième pistes et dans lequel lesdits premiers et troisièmes repères sont respectivement alignés radialement les uns par rapport aux autres autour dudit axe de disque et sont décalés angulairement des seconds repères.

8. Procédé selon la revendication 6, incluant en outre l'étape de formation suivant la direction radiale dudit disque d'une pluralité desdits premier et second segments de piste successivement en alternance sur ladite surface d'enregistrement, chaque dit segment de piste étant respectivement espacé radialement dudit segment de piste adjacent d'une distance inférieure ou égale à environ deux fois le diamètre efficace le plus grand des repères, dans lequel ladite pluralité de segments de piste font respectivement partie de pistes concentriques uniques espacées radialement respectivement les unes des autres autour dudit axe central de disque.

9. Procédé selon la revendication 8, dans lequel l'espacement radial entre des pistes adjacentes est non uniforme sur ledit disque de telle sorte que les pistes situées vers le bord du disque soient espacées de moins que les pistes situées vers le centre du disque.

10. Procédé selon la revendication 9, dans lequel les positions radiales desdites pistes par rapport à l'axe central dudit disque sont situées conformément à une fonction polynomiale.

11. Procédé selon l'une quelconque des revendications précédentes, dans lequel ledit support de stockage d'enregistrement numérique est un support de stockage optique et dans lequel lesdits repères formés sur lesdits premier et second segments de piste peuvent être lus optiquement.

12. Appareil de stockage d'information comprenant :

(a) un support de stockage d'information d'un type qui convient pour accepter sélectivement une information numérique sous la forme de repères ;

(b) un moyen pour supporter ledit support de stockage d'information de manière à définir une zone de surface d'enregistrement dudit support ;

(c) ladite surface d'enregistrement de support comportant une pluralité de pistes formatées de façon générale parallèlement qui sont définies dessus, chaque dite piste comportant une pluralité d'emplacements de stockage d'information alignés et espacés le long d'elle-même, chaque emplacement de stockage d'information convenant pour recevoir un repère présentant une dimension de largeur telle que mesurée par rapport à ladite zone de surface d'enregistrement suivant une direction généralement perpendiculaire auxdites pistes, les emplacements de stockage d'information de pistes adjacentes étant configurés d'une manière interchiffre de telle sorte que des repères de pistes adjacentes soient décalés les uns par rapport aux autres,

caractérisé en ce que :

certaines adjacentes desdites pistes sont espacées les unes des autres d'une distance inférieure ou égale à deux fois ladite dimension de largeur des repères, ce qui permet d'augmenter la densité de stockage des repères de ladite surface d'enregistrement de support sans augmenter une interférence interpistes.

13. Appareil de stockage d'information selon la revendication 12, dans lequel ledit support de stockage d'information est un support de stockage à écriture magnétique dans lequel lesdits repères sont formés en réponse à des signaux d'énergie électromagnétique.

14. Appareil de stockage d'information selon la revendication 12 ou 13, dans lequel ledit moyen de support comprend un disque et dans lequel ladite surface d'enregistrement représente une surface généralement plane dudit disque.

15. Appareil de stockage d'information selon la revendication 12, 13 ou 14, dans lequel ledit support de stockage d'information est d'un type qui convient pour enregistrer lesdits repères présentant des propriétés de lecture optique.

16. Appareil de stockage d'information selon l'une quelconque des revendications 12 à 15, dans lequel l'espacement radial entre des pistes adjacentes est non uniforme sur la zone de surface d'enregistrement.

17. Appareil de stockage d'information selon la revendication 16, dans lequel l'espacement interpistes séparant des pistes adjacentes décroît en douceur de façon monotone en fonction de l'augmentation de la distance radiale desdites pistes par rapport à l'axe central de disque.

FIG. 1

FIG. 2

FIG. 3

FIG. 4

FIG. 5

FIG. 6A

FIG. 6B

FIG. 7

RADIAL
DIRECTION

**FIG. 8**

TRACK SPACING (MICRONS)

OUTER RADIUS

P (mm)

INNER RADIUS

**FIG. 9**

OUTER RADIUS TRACKING SPACING $T_o$ (MICRONS)

A

B

C

17.1K
17.6K
18.2K
18.8K
19.4K
20.0K
20.7K
21.4K
22.2K
23.1K
24.0K
25.0K
26.1K
27.3K
28.6K
30.0K
31.6K
33.3K
35.3K

INNER RADIUS TRACK SPACING $T_i$ (MICRONS)

FIG. 10

A.

B.           100111010        TRACK X

C.          TRACK X

       I    O    O     I    I    I    O     I    O

D.

OPTICAL
MODULATIONS

EP 0 256 110 B1